# EUROPÄISCHE PATENTSCHRIFT

(11) **EP 0 617 211 B1**
(45) Veröffentlichungstag und Bekanntmachung des Hinweises auf die Patenterteilung: **21.05.1997**
(21) Anmeldenummer: 93114830.8
(22) Anmeldetag: 15.09.1993
(51) Int. Cl.: F16F 13/00

(54) **Hydraulisch dämpfende Hülsengummifeder**
Hydraulically damped rubber bushing
Manchon élastique à amortissement hydraulique

(30) Priorität: 25.02.1993 DE 4305808
(43) Veröffentlichungstag der Anmeldung: 28.09.1994
(73) Patentinhaber: Firma Carl Freudenberg, D-69469 Weinheim (DE)
(72) Erfinder: Simuttis, Arnold, Dr., D-55545 Bad Kreuznach (DE); Rudolf, Axel, D-64625 Bensheim (DE); Hettler, Werner, D-68259 Mannheim (DE)

(56) Entgegenhaltungen:
- EP-A- 0 386 735
- EP-A- 0 392 513
- EP-A- 0 425 759
- DE-A- 3 810 310
- PATENT ABSTRACTS OF JAPAN vol. 13, no. 432 (M-874) (3780) 27. September 1989 & JP-A-01 164 832 (TOKAI RUBBER IND LTD)
- PATENT ABSTRACTS OF JAPAN vol. 11, no. 135 (M-585) (2582) 28. April 1987 & JP-A-61 274 131 (TOKAI RUBBER IND LTD)

## Beschreibung

Die Erfindung bezieht sich auf eine hydraulisch dämpfende Hülsengummifeder nach dem Oberbegriff von Anspruch 1.

Eine Hülsengummifeder der vorstehend genannten Art ist aus der DE-A-38 10 310 bekannt. Das darin gezeigte Gummilager ist derart ausgebildet, daß die Gummifeder auf Schub beansprucht werden kann und daß hochfrequente Schwingungen mit kleinen Amplituden nicht gedämpft, dagegen niederfrequente Schwingungen mit großen Amplituden stark gedämpft werden. Eine Dämpfung von betriebsbedingt eingeleiteten Schwingungen ist nur in radialer Richtung möglich, wobei die Federsteifigkeiten in axialer und radialer Richtung nur unzureichend auf den jeweiligen Anwendungsfall einstellbar sind, weil zylindrische Hohlfedern axial steif und bei großen radialen Beanspruchungen nur radial weich ausgeführt werden können.

Andere übliche Hülsengummifederausführungen mit nur radial angeordneten Federn und stirnseitig vergleichsweise dünnen Kammmerwänden ergeben physikalisch prinzipbedingt relativ hohe Radial- und im Vergleich dazu sehr niedrige Axialfederraten.

Der Erfindung liegt die Aufgabe zugrunde, eine hydraulisch dämpfende Hülsengummifeder der eingangs genannten Art bereitzustellen, daß ihre axialen und radialen Federsteifigkeiten wunschgemäß auf den jeweiligen Anwendungsfall eingestellt werden können.

Hierzu wird nach der Erfindung eine hydraulisch dämpfende Hülsengummifeder bereitgestellt, welche im Patentanspruch 1 angegeben ist.

Weitere vorteilhafte Ausgestaltungen sind in den Ansprüchen 2 bis 10 angegeben.

Die montage bedingten axialen Vorspann bewegungen der Ringteile bei der erfindungsgemäßen Hülsengummifeder bewirken, daß die zweiten axial innenliegenden Teilbereiche der Feder innerhalb des durch die seitlichen Tragteile und die außeren Stutzhulse begrenzten Raums eine Vorspannung bevorzugt und hauptsachlich in radialer Richtung aufbauen.

Hierdurch können die Gebrauchseigenschaften der Hülsengummifeder dem jeweiligen Anwendungsfall angepaßt werden. Eine derartige Hülsengummifeder kann große statische Lasten, beispielsweise von mehr als 1 kN, in radialer Richtung stützen und gleichzeitig hohe dynamische Lasten in axialer Richtung aufnehmen. Die Abstützung dynamischer Lasten in axialer Richtung ist beispielsweise dann gefordert, wenn die Hülsengummifeder in Nutzfahrzeugen zur Anwendung gelangt, um das Fahrerhaus gegenüber dem Fahrgestell abzustützen. Durch die Dämpfungseinrichtung wird eine hohe Dämpfung in radialer Richtung bei niedrigen Frequenzen, bevorzugt zwischen 5 und 15 Hz erreicht. Die beiden unabhängig voneinander erzeugten Ringteile bedingen eine einfache Montage der Hülsengummifeder, was in wirtschaftlicher und fertigungstechnischer Hinsicht von hervorzuhebender Bedeutung ist.

Die Federkörper können zumindest eine der Arbeitskammern auf der von den inneren Stützhülsen abgewandten Seite mit einem dachförmigen Profil begrenzen, wobei die Federkörper zur Einstellung einer radialen Vorspannung herstellungsbedingt eine größere axiale Ausdehnung aufweisen, als im vorgespannten Montagezustand und wobei sich zur Einstellung der axialen Vorspannung die einander axial benachbarten inneren und äußeren Stützhülsen im Montagezustand zumindest teilweise umgreifen. Hierbei ist von Vorteil, daß die Hülsengummifeder nur aus zwei Gummimetallteilen gefertigt ist, die in axialer Richtung gegeneinander verspannt werden. Die statischen und dynamischen Lasten in axialer Richtung werden hauptsächlich über hülsenfederähnliche Traganteile von den sich örtlich radial erstreckenden Innenhülsen auf die Außenhülsen mit ebenfalls örlicher radialer Erstreckung übertragen. Eine sehr hohe Dämpfung in radialer Richtung wird bei Einleitung tieffrequenter Schwingungen mit großen Amplituden dadurch erreicht, daß die Federkörper die Arbeitskammern dachförmig begrenzen und sich dadurch bis in den Bereich der radial nach außen vorspringenden, inneren Stützhülsen erstrecken. Jede der beiden Arbeitskammern weist dadurch eine große, hydraulisch wirksame Kolbenfläche auf, wobei zur Dämpfung Flüssigkeitsauteile aus der Arbeitskammer mit vergleichsweise höherem Druck durch die Dämpfungseinrichtung, die beispielsweise durch einen Drosselkanal oder einen Tilgerkanal gebildet sein kann, in die Arbeitskammer mit relativ geringerem Druck gepumpt wird. Durch diese Ausgestaltung werden Kavitationserscheinungen bei großen Kraft- beziehungsweise Wegamplituden vermieden.

Gemäß Anspruch 3 können die inneren und die äußeren Stützhülsen aus einem metallischen Werkstoff bestehen, wobei zumindest eine der inneren und zumindest eine der äußeren Stützhülsen ein Ende der axial benachbarten Stützhülsen formschlüssig umgreifen. In Verbindung mit relativ blähharten Federkörpern, die die Kammerwände der Hülsengummifeder bilden, ist durch diese Ausgestaltung eine gute Formbeständigkeit der Hülsengummifeder und eine gute Abstützung von axialen Lasten gewährleistet. Die formschlüssige Festlegung der einander in axialer Richtung benachbarten Stützhülsen kann bevorzugt durch einfaches Umbördeln der Stützhülsen erfolgen.

Zur Aufnahme größerer Lasten in radialer und axialer Richtung können nach Anspruch 4 die Federkörper auf den einander zugewandten Seiten herstellungsbedingt einen im wesentlichen O-förmigen Spalt begrenzen. Während der Montage der beiden axial benachbarten Ringkörper unter axialer Vorspannung aneinander, wird durch die Ausgestaltung der einander benachbarten Stirnflächen der Federkörper eine elastische Verformung und Stauchung in diesem Bereich erzielt, was zu einer Vergrößerung der Federrate sowohl in axialer als auch in radialer Richtung führt.

Die Ausnehmungen der Federkörper können nach Anspruch 5 auf den einander zugewandten Seiten mindestens einen Drosselkanal bilden. Durch diese Ausgestaltung bedarf es nicht separat geformter Dämpfungsöffnungen. Der elastomere Werkstoff des Federkörpers wirkt im Bereich der Trennfuge der beiden axiale benachbarten Federkörper als Dichtung.

Der Drosselkanal kann nach Anspruch 6 im Bereich des Innenumfangs der äußeren Stützhülsen angeordnet sein. Durch die relativ blähharte Ausbildung der Federkörper ist zur Dämpfung tieffrequenter Schwingungen ein sehr langer Drosselkanal erforderlich, um mit der Resonanzschwingung der Flüssigkeitsanteile innerhalb des Drosselkanals den gewünschten Dämpfungseffekt zu erzielen. Zusätzlich zur Anordnung des Drosselkanals im Bereich des Außenumfangs des Lagers kann dieser gefaltet ausgebildet sein. Die Faltung erstreckt sich bevorzugt über den doppelten Umfang der Hülsengummifeder. Will man den Druck in den beiden Arbeitskammern begrenzen, sind durch entsprechend dünne Gestaltung des Gummis im Bereich nebeneinanderliegender Kanalabschnitte Ventilfunktionen erreichbar. Im Extremfall kann bei entsprechender Lage der Öffungen des Kanals in die beiden Kammern sogar ein hydraulischer Kurzschluß bei einem bestimmbaren hohen Druck erreicht werden. Eine davon abweichende Ausgestaltung, beispielsweise die flüssigkeitsleitende Verbindung zwischen den Arbeitskammern durch eine Drosselbohrung ist ebenfalls denkbar.

Die inneren Hülsen können nach Anspruch 7 innenseitig und im Bereich ihrer voneinander abgewandten Stirnseiten auf zumindest einer Gleithülse aus polymerem Werkstoff abgestützt sein, wobei die Gleithülse in axialer und radialer Richtung in einem Lagerbock geführt ist. Eine derartige Ausgestaltung bietet sich insbesondere dann an, wenn die erfindungsgemäße Hülsengummifeder zur Lagerung eines Nutzfahrzeug-Fahrerhauses zur Anwendung gelangt. Hierbei ist von Vorteil, daß das Fahrerhaus um die Buchsenachse schwenkbar ist, ohne die Federkörper innerhalb der Hülsengummifeder zu tordieren. Als Werkstoff gelangen gleitfähige Materialien, bevorzugt Polyamid oder PTFE-Kunststoffe zur Anwendung.

Die inneren Stützhülsen können nach Anspruch 8 im montierten Zustand ein im wesentlichen wannenförmiges Profil aufweisen und strinseitig von einem einstückig mit dem angrenzenden Federelement ausgebildeten ersten Gummiüberlauf zumindest teilweise umschlossen sein, wobei die äußere Stützhülse eines der beiden Ringteile das axial benachbarte Ringteil zumindest teilweise axial überdeckt und wobei die äußere Stützhülse außenumfangsseitig zumindest teilweise mit einem zweiten Gummiüberlauf versehen ist. Neben der einfachen Montage im Fahrzeug durch die begrenzte Anzahl von Bauteilen, die vormontierbar in einen Lagerbock eingefügt sind, werden durch die Gummiüberläufe Toleranzen der Hülsengummifeder in radialer und axialer Richtung kompensiert. Der Gummiüberlauf kann mit örtlichen Erhöhungen versehen sein, um die Hülsengummifeder spielfrei und definiert stark vorgespannt in der Aufnahme am Maschinenteil zu befestigen, ohne sie beim Einpressen zu beschädigen.

Die Gummiüberläufe können nach Anspruch 9 jeweils mit einer Profilierung versehen sein, die als Längen- und Durchmesser-Toleranzausgleich ausgebildet sind. Die Profilierung im Bereich des zweiten Gummiüberlaufs kann sich wellenförmig in Umfangsrichtung erstrecken, während die Profilierung des stirnseitigen ersten Gummiüberlaufs bevorzugt noppenförmig ausgebildet ist.

Eine Modifikation der Gebrauchseigenschaften kann beispielsweise nach Anspruch 10 dadurch erreicht werden, daß in axialer Richtung zwischen den Ringteilen ein Ventil aus elastomerem Werkstoff angeordnet ist, das mit einem in Richtung der inneren Stützhülsen vorspringenden Schließglied versehen ist, wobei das Schließglied jede Arbeitskammer in zwei axial benachbarte Teilkammern unterteilt und durch Differenzdruck innerhalb der Teilkammern betätigbar ist. Die Anordnung des Ventils bedingt zusätzlich zu der radialen Dämpfung der Hülsengummifeder eine Dämpfung in axialer Richtung. Das Ventil kann hinsichtlich einer einfachen Herstellbarkeit und Montage in der Trennebene zwischen den axial benachbarten Ringteilen angeordnet sein kann. Das Schließglied ist den Inneren Stützhülsen in radialer Richtung bis auf eine kleinen Spalt angenähert und bildet dadurch eine Drosselstelle zur Erzeugung einer axialen Dämpfung.

Die erfindungsgemäße Hülsengummifeder weist gute Gebrauchseigenschaften hinsichtlich der Abstützung radialer und axialer Belastungen, verbunden mit radialer und axialer Dämpfung auf sowie einen einfachen, wenige Einzelteileumfassenden Aufbau.

Mehrere Ausführungsbeispiele der erfindungsgemäßen Hülsengummifeder sind in den Fig. 1 bis 10 dargestellt und werden in nachfolgenden näher beschrieben. Es zeigen:
Fig. 1 ein erstes Ausführungsbeispiel einer Hülsengummifeder, die auf einer Gleithülse in einem Lagerbock angeordnet ist;
Fig. 2 eine Ansichte der Hülsengummifeder aus Fig. 1 von links, wobei der Lagerbock und die Gleithülse zur Verdeutlichung nicht dargestellt sind;
Fig. 3 die Hülsengummifeder aus Fig. 1 in quergeschnittener Darstellung entlang der Schnittlinie B-B;
Fig. 4 die beiden Ringteile im nicht vorgespannten Zustand geschnitten entlang der Linie C-C aus Fig. 2;
Fig. 5 einen Schnitt entlang der Linie D-D aus Fig. 2;
Fig. 6 ein zweites Ausführungsbeispiel einer Hülsengummifeder, ähnlich dem Ausführungsbeispiel aus Fig. 1, wobei ein Federkörper eines Ringteils als einseitig verstärkte Axialfeder ausgebildet ist;
Fig. 7 ein drittes Ausführungsbeispiel, das im wesentlichen dem Ausführungsbeispiel aus Fig. 1 entspricht, wobei jedoch, aufgrund eines anderen Anwendungsfalles, keine Gleithülsen vorgesehen sind;
Fig. 8 ein viertes Ausführungsbeispiel, bei dem durch die axiale Stauchung der Federkörper in radialer Richtung vorspringende, weiche Anschläge gebildet sind;
Fig. 9 ein fünftes Ausführungsbeispiel einer Hülsengummifeder, die zusätzlich zu einer radialen Dämpfung eine Dämpfung in axialer Richtung aufweist;
Fig. 10 ein sechstes Ausführungsbeispiel, ähnlich dem Ausführungsbeispiel aus Fig. 9, wobei zusätzlich zur radialen und axialen Dämpfung ein Ventil zum Abbau von Druckspitzen vorgesehen ist und Fig. 11 ein siebentes Ausführungsbeispiel, ähnlich dem Ausführungsbeispiel aus Fig. 1, wobei die zur Anwendung gelangenden Teile weitgehend symmetrisch ausgebildet sind.

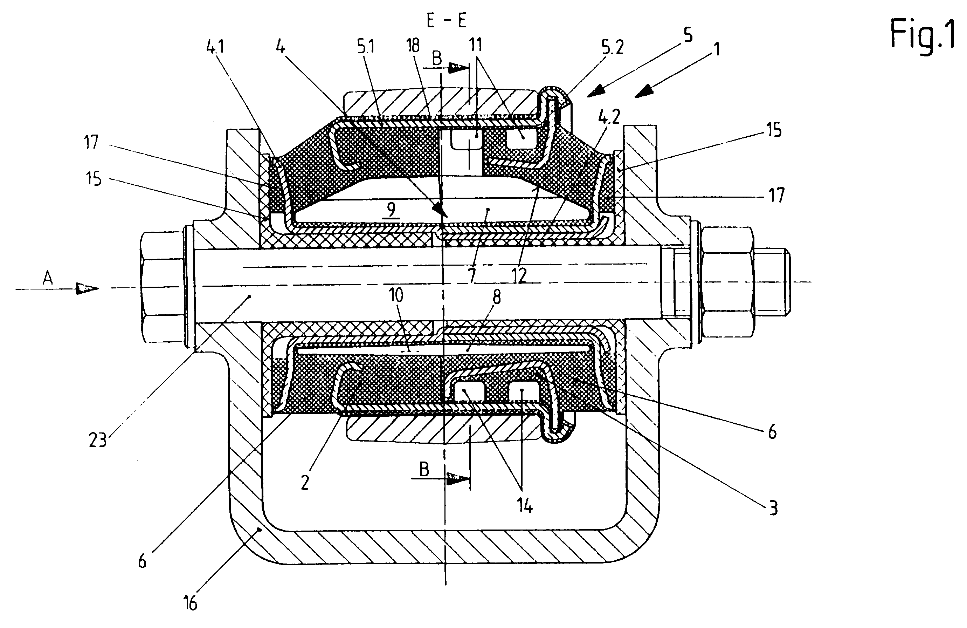

In den Ausführungsbeispielen gemäß der Fig. 1 bis 11 sind hydraulisch dämpfende Hülsengummifedern 1 gezeigt, die im wesentlichen durch zwei unabhängig voneinander erzeugte Ringteile 2, 3 gebildet sind. Die beiden Federkörper 6 der Ringteile 2, 3 sind durch die inneren und äußeren Stützhülsen 4, 5 derart gegeneinander verspannt, daß die Hülsengummifeder 1 Lasten in radialer und axialer Richtung stützen kann. Die innere 4 und äußere Stützhülse 5 sind jeweils zweiteilig ausgeführt 4.1, 4.2; 5.1, 5.2, wobei jeweils eine der Stützhülsen 4.1, 5.1 die in axialer Richtung benachbarte Stützhülse 4.2, 5.2 im Bereich ihres axialen Endes umgreift und in diesem Bereich umgebördelt ist. Die Federkörper 6 der beiden Ringteile 2, 3 weisen Ausnehmungen 7, 8 auf, die einander in Richtung eingeleiteter Radialschwingungen gegenüberliegende Arbeitskammern 9, 10 begrenzen. Die erste und die zweite Arbeitskammer 9, 10 sind durch eine Dämpfungseinrichtung 11, die als Drosselkanal 14 ausgebildet ist, flüssigkeitsleitend miteinander verbunden. Auch der Drosselkanal 14 ist ebenso, wie die beiden Ausnehmungen 7, 8 im Bereich der stirnseitigen Begrenzung zumindest eines der beiden Federkörper 6 angeordnet und wird durch die Verpressung der beiden in axialer Richtung aneinander angrenzenden Federkörper 6 abgedichtet. Um eine möglichst große Förderfläche zu erzielen, sind die beiden Arbeitskammern 9, 10 von einem dachförmigen Profil 12 der Federkörper 6 begrenzt. Tieffrequente Schwingungen werden durch Flüssigkeitsverlagerungen innerhalb des Drosselkanals 14 erzielt, wobei die durch das dachförmige Profil 12 entstandene, große Kolbenfläche die Dämpfung begünstigt. Zur Abstützung großer radialer und axialer Lasten sind die Kammerwände der ersten und zweiten Arbeitskammer 9, 10 vergleichsweise blähsteif ausgeführt, so daß es sich als vorteilhaft bewährt hat, einen gefalteten Dämpfungskanal 14 vorzusehen, der sich im Bereich des Außenumfangs der Hülsengummifeder 1 erstreckt.

In Fig. 1 sind die innere und die äußere Stützhülse 4, 5 mit in radialer Richtung vorstehenden Enden versehen, um radiale und axiale Lasten aufnehmen zu können. Der Lagerbock 16, der einen Bestandteil eines Rahmens von einem Nutzfahrzeug bilden kann, ist durch einen U-förmigen Bügel gebildet, der von einer die Hülsengummifeder 1 aufnehmenden Achse 23 durchdrungen ist. Die Hülsengummifeder 1 ist vormontiert und im Bereich des ersten und zweiten Gummiüberlaufs 17, 18 jeweils mit einer Profilierung 19 versehen, um spielfrei innerhalb des Lagerbocks 16 angeordnet werden zu können. Die Hülsengummifeder 1 ist in Richtung der Achse 23 auf einer zweiteilig ausgebildeten Gleithülse 15 abgestützt, die sich im Bereich der stirnseitigen Enden der Hülsengummifeder 1 in radialer Richtung ersteckt, um ein Schwenken des Fahrerhauses ohne Tordierung der Federkörper 6 zu ermöglichen. In den hier dargestellten Ausführungsbeispielen besteht die Gleithülse 15 aus PTFE. Der Drosselkanal 14 ist in diesem Ausführungsbeispiel gefaltet ausgebildet und erstreckt sich zwei mal innenumfangsseitig entlang der äußeren Stützhülse 5.1.

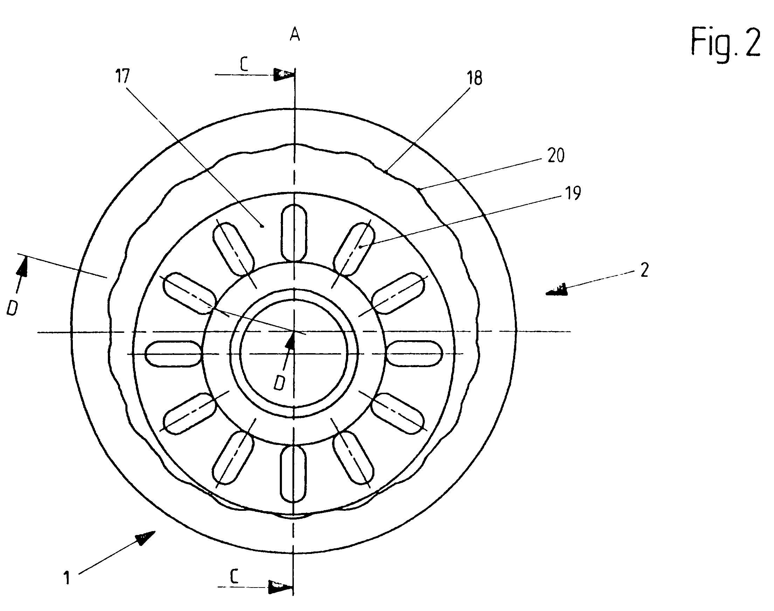

In Fig. 2 ist die Ansicht des Lagers aus Fig. 1 von links dargestellt. Zur Verdeutlichung der eigentlichen Hülsengummifeder 1 sind die Gleithülse 15 und der Lagerbock 16 aus Fig. 1 nicht gezeigt. Der erste und zweite Gummiüberlauf 17, 18 mit ihren Profilierungen 19, 20 sind in dieser Zeichnung gut zu erkennen. Der erste Gummiüberlauf 17 im Bereich der Stirnseite des Ringteils 2 ist mit einer Profilierung in Form ovaler Noppen gebildet. Herstellungsbedingte axiale Toleranzen der Hülsengummifeder 1 und/oder des Lagerbocks 16 aus Fig. 1 können durch die Profilierung 19 des ersten Gummiüberlaufs 17 problemlos ausgeglichen werden. Der zweite Gummiüberlauf 18 erstreckt sich außenumfangsseitig um die äußere Stützhülse 5.1 des Ringteils 2 und weist eine umfangsseitig umlaufende Wellung als Profilierung 20 auf. Durchmessertoleranzen des die Hülsengummifeder 1 umschließenden Bauteils und/oder der Hülsengummifeder 1 werden durch die elastische Nachgiebigkeit der Profilierung 20 kompensiert.

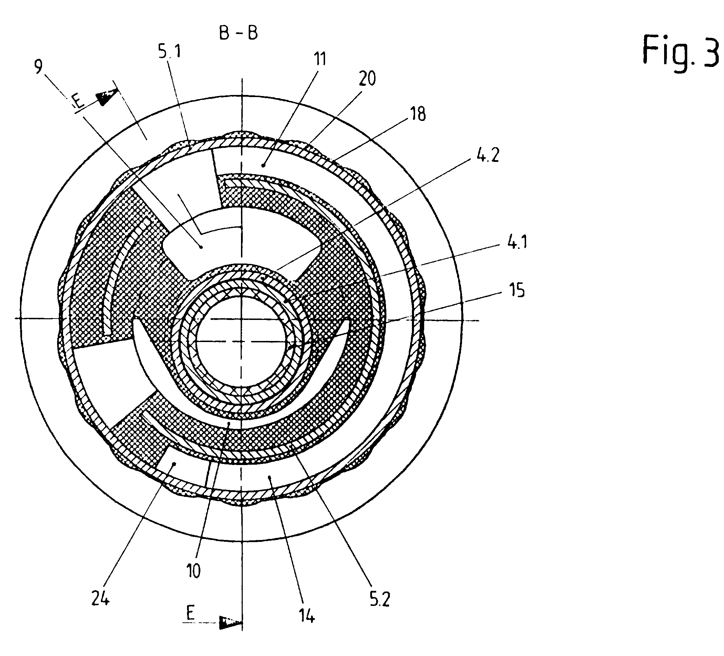

In Fig. 3 ist die Hülsengummifeder 1 aus Fig. 1 entlang des Schnitts B-B dargestellt. In dieser Fig. ist die gefaltete Dämpfungseinrichtung 11 in Form eines Drosselkanals 14 zu erkennen. Der in axialer Richtung benachbarte Kanal wird durch die Verbindungsöffnung 24 verwiklicht, in den die Dämpfungsflüssigkeit umgelenkt wird. Durch die gefaltete Ausgestaltung des Drosselkanals 14 und die daraus resultierende große Länge können tieffrequente Schwingungen im Bereich von 5 bis 15 Hz ausgezeichnet gedämpft werden. Die Profilierung 20 des zweiten Gummiüberlaufs 18 erstreckt sich entlang der Außenumfangsfläche der äußeren Stützhülse 5.1.

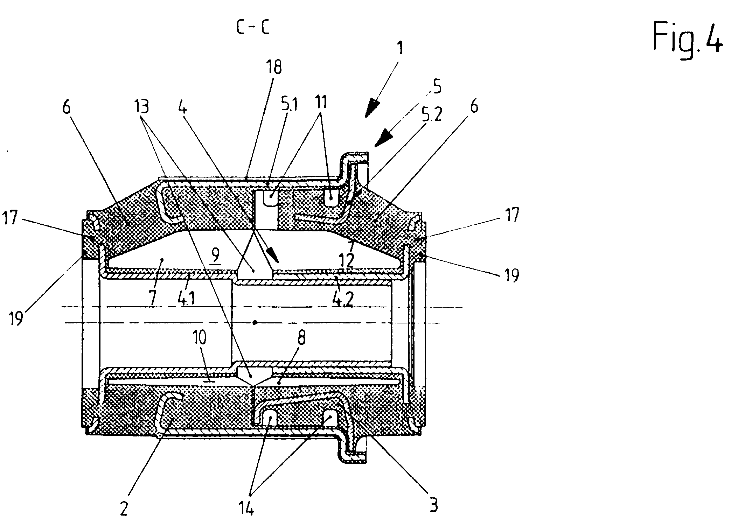

In Fig. 4 ist die Hülsengummifeder 1 aus Fig. 2 entlang der Linie C-C geschnitten dargestellt. Die beiden Ringteile 2, 3 sind herstellungsbedingt im nicht verspannten Zustand gezeigt. Die Federkörper 6 der beiden Ringteile 2, 3 weisen auf den einander zugewandten Stirnseiten ein in axialer Richtung zurückspringendes Profil auf, so daß die Stirnseiten einen O-förmigen Spalt 13 begrenzen.

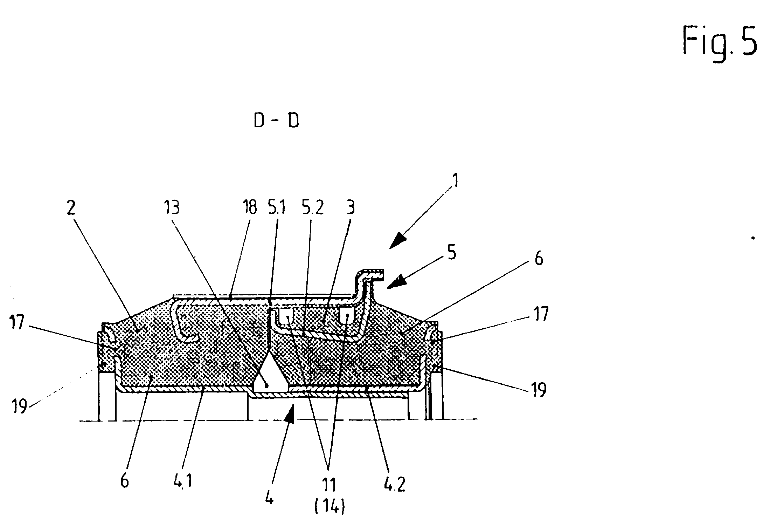

In Fig. 5 ist der Schnitt D-D aus Fig. 2 in halbgeschnittener Darstellung gezeigt, wobei zu erkennen ist, daß sich bei axialer Verspannung der beiden Ringteile 2, 3 eine Stauchung der beiden Federkörper 6 ergibt. Die Einstellung der Federsteifigkeit erfolgt über die Ausgestaltung der Federkörper 6 und die Geometrie der inneren Stützhülsen 4.1, 4.2, die zur Montage formschlüssig miteinander in Eingriff gebracht werden. In dem hier gezeigten Ausführungsbeispiel wird nach dem axialen Zusammenschieben der beiden Ringteile 2, 3 die innere Stützhülse 4.1 in radialer Richtung nach außen umgebördelt.

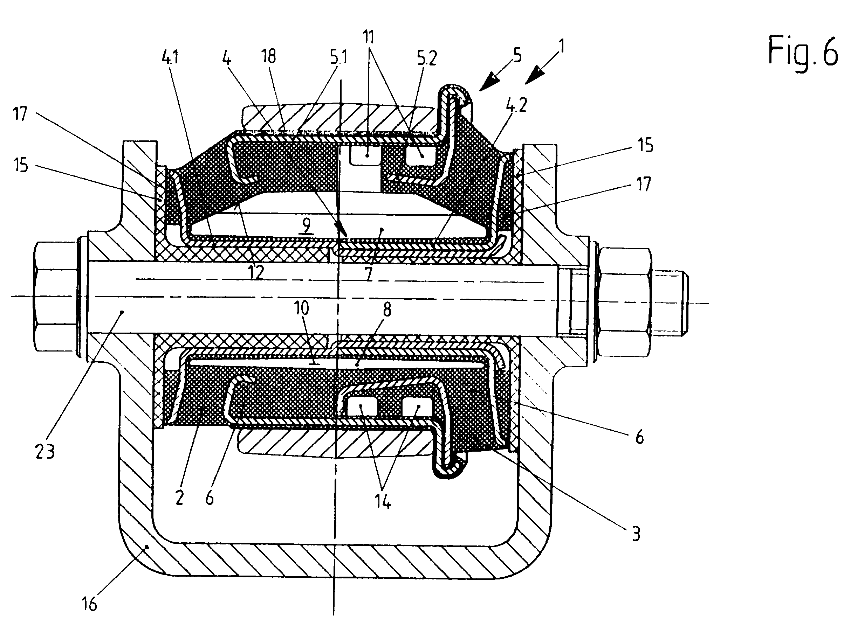

In Fig. 6 ist ein zweites Ausführungsbeispiel einer Hülsengummifeder 1 gezeigt, wobei der Federkörper 6 des Ringteils 3, verglichen mit dem Federkörper 6 des Ringteils 2 verstärkt ausgebildet ist. Durch die asymmetrische Ausgestaltung der beiden Hülsengummifedern können Kräfte, die vorzugsweise nur aus einer axialen Richtung wirken besser gestützt werden. Dazu wird die hauptsächlich druckkräftetragende Seite im Durchmesser vergrößert und in der Wandstärke verdickt.

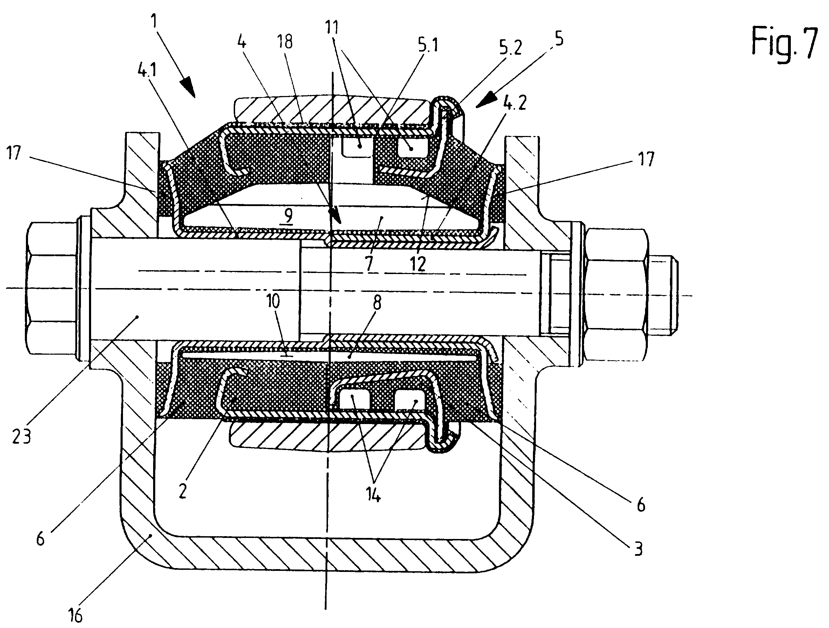

In Fig. 7 ist ein drittes Ausführungsbeispiel gezeigt, das im wesentlichen dem ersten Ausführungsbeispiel aus Fig. 1 entspricht. Die hier gezeigt Hülsengummifeder 1 gelangt jedoch nicht als Lagerung für ein Fahrerhaus eines Nutzfahrzeugs zur Anwendung sondern zum Abstützen zweier Maschinenteile aufeinander. Dadurch, daß die beiden Maschinenteile nicht schwenkbar zueinander ausgebildet sind ist die Gleithülse 15 in diesem Falle entbehrlich.

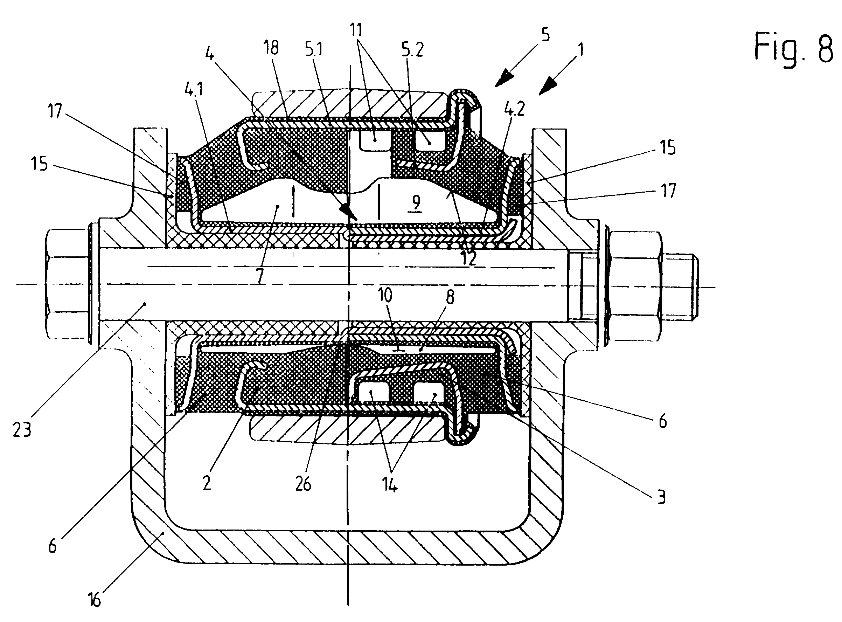

Fig. 8 unterscheidet sich von den zuvor beschriebenen Ausgestaltungen dadurch, daß die beiden Federkörper 6 der Ringteile 2, 3 in axialer Richtung derart vorgespannt sind, daß sich montagebedingt ein Anschlagpuffer 26 bildet. Durch die Stauchung des elastomeren Werkstoffs, der zwischen den radialen Vorsprüngen der inneren Stützhülsen 4.1, 4.2 in der Trennebene zwischen den beiden Ringteilen 2, 3 angeordnet ist, weicht der Gummianteil, der axial verdrängt wird, in radialer Richtung aus. Dadurch ergibt sich montagebedingt eine örtliche Verdickung, die als Anschlagpuffer 26 zur Begrenzung von Extremauslenkungen genutzt werden kann.

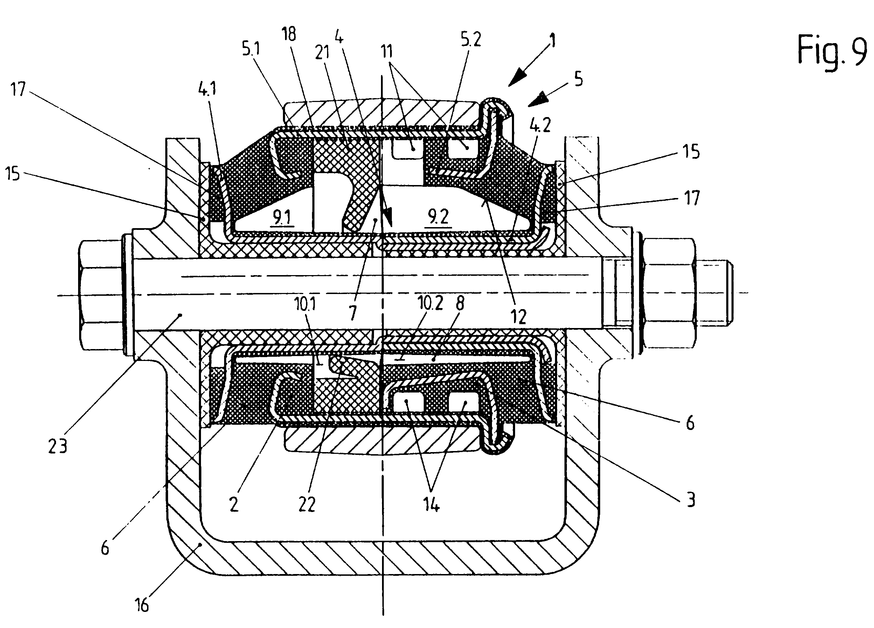

In manchen Fällen hat es sich als vorteilhaft bewährt, wenn zusätzlich zu der Dämpfung in radialer Richtung auch Auslenkbewegungen in axialer Richtung gedämpft werden können. Eine Hülsengummifeder 1, die derartige Anforderungen erfüllt, ist in Fig. 9 gezeigt. Zwischen den beiden Ringteilen 2, 3 ist innerhalb der Trennebene ein Ventil 21 aus elastomerem Werkstoff eingesetzt, das durch die axiale Verspannung der beiden Ringteile 2, 3 in seiner Position gehalten wird. Das Schließglied 22 des Ventils 21 begrenzt mit der inneren Stützhülse 4.1 einen Spalt der als Drosselstelle ausgebildet ist.

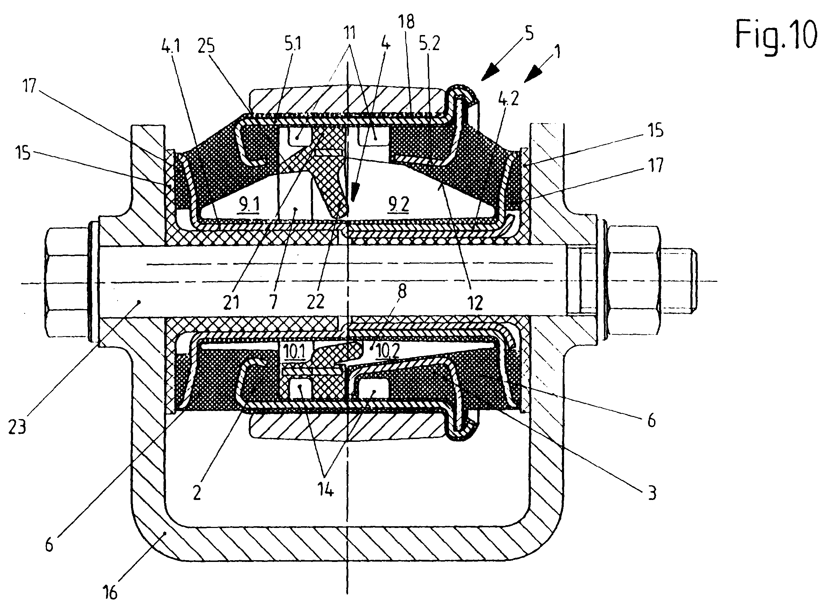

In Fig. 10 ist eine Hülsengummifeder 1 gezeigt, die im wesentlichen der Hülsengummifeder 1 aus Fig. 9 entspricht. Das Ventil 21 weist in diesem Ausführungsbeispiel ein zweites Schließglied 25 auf, das in der Trennfuge zwischen den in axialer Richtung benachbarten Ringteilen 2,3 angeordnet ist. Das zweite Schließglied 25 ist zur Stoßentkopplung, also um Druckspitzen abbauen zu können, am Ausgang des doppelumlaufenden Drosselkanals 14 angeordnet. Bei Überschreitung eines maximal zulässigen Drucks öffnet das zweite Schließglied in Richtung der ersten Arbeitskammer, so daß Beschädigungen der Hülsengummifeder 1 zuverlässig vermieden werden. Das Ventil 21 ist in diesem Ausführungsbeispiel als Gummi-Metallteil ausgeführt, um eine erhöhte Formstabilität aufzuweisen.

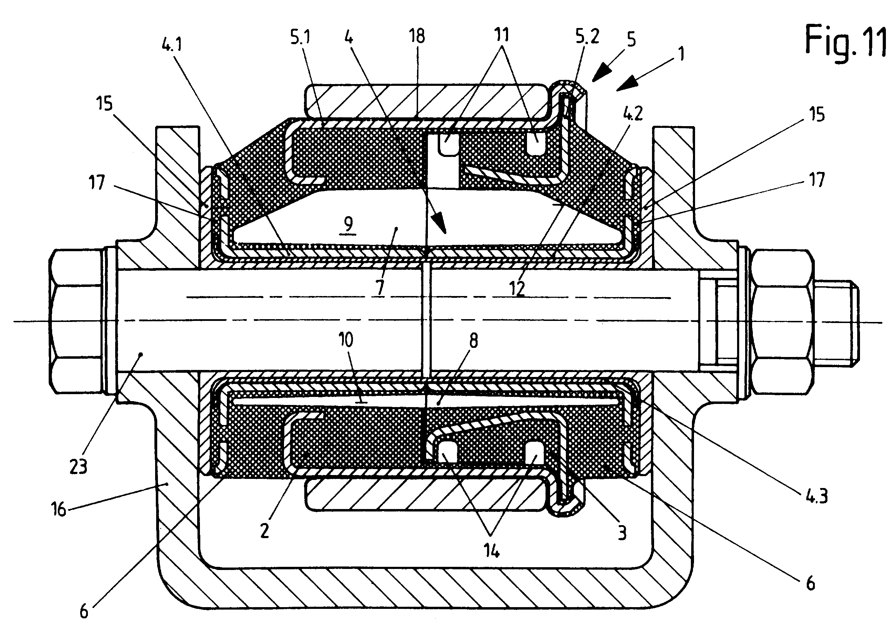

In Fig. 11 wird eine gegenüber Fig. 1 abgewandelte Ausführungsvariante gezeigt, bei der die Gleithülsen 15 symmetrisch gleich ausgeführt sind, wie auch die inneren Stützhülsen 4.1 und 4.2. Um das Teil zusammenzuhalten, wird dann zusätzlich eine dünne metallische Hülse 4.3 eingebaut.

Die Ausführungsbeispiele der zuvor beschriebenen Lager sind jeweils ohne statische Last in radialer Richtung dargestellt. Dadurch ergibt sich die exzentrische Zuordnung der äußeren Stützhülse 5 zur inneren Stützhülse 4. Nach dem Aufbringen einer statischen Last kann diese Exzentrizität verringert oder vollständig aufgehoben werden.

## Patentansprüche

1. Hydraulisch dämpfende Hülsengummifeder (1), umfassend zwei unabhängig voneinander erzeugte Ringteile (2, 3), die in axialer Richtung zusammengefügt sind, wobei die Ringteile jeweils eine innere (4; 4.1, 4.2) und eine die innere mit radialem Abstand umschließende äußere Stützhülse (5; 5.1, 5.2) aufweisen, sowie einen die Stützhülsen (4, 5) verbindenden Federkörper (6) aus elastomerem Werkstoff, der mit zumindest zwei Ausnehmungen (7, 8) versehen ist, wobei die Ringteile derart ausgebildet und zusammengefügt sind, daß die Ausnehmungen einander zu einer ersten und einer zweiten flüssigkeitsgefüllten Arbeitskammer (9, lO) ergänzen, die zur Umgebung hin abgedichtet und durch zumindest eine Dämpfungseinrichtung (11) flüssigkeitsleitend miteinander verbunden sind, und wobei die Übertragung der Belastungen hauptsächlich in axialer Richtung über sich bereichsweise radial erstreckende Traganteile der inneren Stützhülsen (4.1, 4.2) unter Zwischenschaltung erster axialer äußerer Teilbereiche des Federkörpers (6) auf ebenfalls bereichsweise sich radial erstreckende Traganteile der äußeren Stützhülsen (5.1, 5.2) erfolgt, **dadurch gekennzeichnet,** daß ein zweiter axial an die Traganteile der äußeren Stützhülsen (5.1, 5.2) sich anschließender innerer Teilbereich der Federkörper (6) radial außen an der jeweils äußeren Stützhülse (5.1, 5.2) anliegt und daß die axial benachbarten Stirnflächen der zweiten Teilbereiche der Federkörper (6) unter axialer Vorspannung durch Montage derart aneinanderliegen, daß eine elastische Verformung und Stauchung in diesem Bereich zur Vergrößerung der Federrate sowohl in axialer als auch in radialer Richtung auftreten.

2. Hülsengummifeder nach Anspruch 1, dadurch gekennzeichnet, daß die Federkörper (6) zumindest eine der Arbeitskammern (9, 10) auf der von den inneren Stützhülsen (4) abgewandten Seite mit einem dachförmigen Profil (12) begrenzen, daß die Federkörper (6) zur Einstellung einer radialen Vorspannung herstellungsbedingt eine größere axiale Ausdehnung aufweisen, als im vorgespannten Montagezustand und daß sich zur Einstellung einer axialen Vorspannung die einander axial benachbarten inneren und äußeren Stützhülsen (4, 5) im Montagezustand zumindest teilweise umgreifen.

3. Hülsengummifeder nach Anspruch 2, dadurch gekennzeichnet, daß die inneren und äußeren Stützhülsen (4, 5) aus einem metallischen Werkstoff bestehen und daß zumindest eine der inneren (4.1) und zumindest eine der äußeren Stützhülsen (5.1) ein Ende der axiale benachbarten Stützhülsen (4.2, 5.2) formschlüssig umgreifen.

4. Hülsengummifeder nach Anspruch 1 bis 3, dadurch gekennzeichnet, daß die Federkörper (6) auf den einander zugewandten Seiten herstellungsbedingt einen im wesentlichen O-förmigen Spalt (13) begrenzen.

5. Hülsengummifeder nach Anspruch 1 bis 4, dadurch gekennzeichnet, daß die Ausnehmungen (7, 8) der Federkörper (6) auf den einander zugewandten Seiten zumindest einen Drosselkanal (14) bilden.

6. Hülsengummifeder nach Anspruch 5, dadurch gekennzeichnet, daß der Drosselkanal (14) im Bereich des Innenumfangs der äußeren Stützhülsen (5) angeordnet ist.

7. Hülsengummifeder nach Anspruch 1 bis 6, dadurch gekennzeichnet, daß die inneren Stützhülsen (4.1, 4.2) innenseitig und im Bereich ihrer voneinander abgewandten Stirnseiten auf zumindest einer Gleithülse (15) aus polymerem Werkstoff abgestützt sind und daß die Gleithülse (15) in axialer und radialer Richtung in einem Lagerbock (16) geführt ist.

8. Hülsengummifeder nach Anspruch 1 bis 7, dadurch gekennzeichnet, daß die inneren Stützhülsen (4.1, 4.2) im montierten Zustand ein im wesentlichen wannenförmiges Profil aufweisen und stirnseitig von einem einstückig mit dem angrenzenden Federelement (6) ausgebildeten ersten Gummiüberlauf (17) zumindest teilweise umschlossen sind, daß die äußere Stützhülse (5.1) eines der beiden Ringteile (2) das axial benachbarte Ringelement (3) zumindest teilweise axial überdeckt und daß die äußere Stützhülse (5.1) außenumfangsseitig zumindest teilweise mit einem zweiten Gummiüberlauf (18) versehen ist.

9. Hülsengummifeder nach Anspruch 8, dadurch gekennzeichnet, daß die Gummiüberläufe (17, 18) mit jeweils einer Profilierung (19, 20) versehen sind, die als Längen- und Durchmesser-Toleranzausgleich ausgebildet sind.

10. Hülsengummifeder nach Anspruch 1 bis 9, dadurch gekennzeichnet, daß in axialer Richtung zwischen den Ringteilen (2, 3) ein Ventil (21) aus elastomerem Werkstoff angeordnet ist, das mit einem in Richtung der inneren Stützhülsen (4) vorspringenden Schließglied (22) versehen ist und daß das Schließglied (22) jede Arbeitskammer (9, 10) in zwei axial benachbarte Teilkammern (9.1, 9.2; 10.1, 10.2) unterteilt und durch Differenzdruck innerhalb der Teilkammern (9.1, 9.2; 10.1, 10.2) betätigbar ist.

## Claims

1. A hydraulically damped rubber bushing (1) comprising two annular parts (2, 3) which are produced independently of one another and are joined together in the axial direction, the annular parts each having an inner supporting sleeve (4; 4.1, 4.2) and an outer supporting sleeve (5; 5.1, 5.2) surrounding the inner supporting sleeve with a radial spacing, and further comprising a spring body (6) of elastomeric material which connects the supporting sleeves (4, 5) and is provided with at least two cavities (7, 8), the annular parts being designed and joined together in such a way that the cavities complement one another to form a first and a second fluid-filled working chamber (9, 10), which are sealed off from the surroundings and are connected to one another by at least one damping device (11) in a manner which allows the transmission of fluid, and the loads being transmitted primarily in the axial direction, via bearing portions of the inner supporting sleeves (4.1, 4.2), said bearing portions extending radially in some areas, with the interposition of first, axial outer partial areas of the spring body (6), to bearing portions of the outer supporting sleeves (5.1, 5.2), the latter bearing portions likewise extending radially in some areas, characterized in that a second, inner partial area of the spring bodies (6), which axially adjoins the bearing portions of the outer supporting sleeves (5.1, 5.2), rests radially against the outside of the respectively outer supporting sleeve (5.1, 5.2), and in that the axially adjacent end faces of the second partial areas of the spring bodies (6) rest against one another in such a way under axial prestress, due to installation, that an elastic deformation and compression in this area for the purpose of increasing the spring rate both in the axial and in the radial direction occur.

2. A rubber bushing according to claim 1, characterized in that the spring bodies (6) delimit at least one of the working chambers (9, 10) on the side facing away from the inner supporting sleeves (4) by means of a roof-shaped profile (12), in that, in order to establish a radial prestress, the spring bodies (6) as manufactured have a greater axial extent than in the prestressed, installed state and in that, to establish an axial prestress, the axially adjacent inner and outer supporting sleeves (4, 5) surround one another at least partially in the installed state.

3. A rubber bushing according to claim 2, characterized in that the inner and outer supporting sleeves (4, 5) are composed of a metallic material and in that at least one (4.1) of the inner supporting sleeves and at least one (5.1) of the outer supporting sleeves surrounds one end of the axially adjacent supporting sleeves (4.2, 5.2) with positive engagement.

4. A rubber bushing according to any of claims 1 to 3, characterized in that, as manufactured, the spring bodies (6) delimit an essentially O-shaped gap (13) on the sides which face one another.

5. A rubber bushing according to any of claims 1 to 4, characterized in that the cavities (7, 8) in the spring bodies (6) form at least one restrictor passage (14) on the sides facing one another.

6. A rubber bushing according to claim 5, characterized in that the restrictor passage (14) is arranged in the region of the inner circumference of the outer supporting sleeves (5).

7. A rubber bushing according to any of claims 1 to 6, characterized in that the inner supporting sleeves (4.1, 4.2) are supported, on the inside and in the region of their mutually remote ends, on at least one sliding sleeve (15) made of polymeric material, and in that the sliding sleeve (15) is guided in the axial and radial direction in a bearing bracket (16).

8. A rubber bushing according to any of claims 1 to 7, characterized in that the inner supporting sleeves (4.1, 4.2) have an essentially trough-shaped profile in the installed state and are at least partially surrounded at the ends by a first rubber overflow (17) formed integrally with the adjoining spring element (6), in that the outer supporting sleeve (5.1) of one of the two annular parts (2) at least partially overlap the axially adjacent annular element (3) axially and in that the outer supporting sleeve (5.1) is provided at least partially on the outer circumference with a second rubber overflow (18).

9. A rubber bushing according to claim 8, characterized in that the rubber overflows (17, 18) are each provided with a profiling (19, 20), these being designed as means of compensating length and diameter tolerances.

10. A rubber bushing according to any of claims 1 to 9, characterized in that a valve (21) made of elastomeric material is arranged axially between the annular parts (2, 3), said valve being provided with a closing member (22) which projects in the direction of the inner supporting sleeves (4), and in that the closing member (22) divides each working chamber (9, 10) into two axially adjacent subchambers (9.1, 9.2; 10.1, 10.2) and can be actuated by differential pressure within the subchambers (9.1, 9.2; 10.1, 10.2).

## Revendications

1. Manchon élastique (1) à amortissement hydraulique, comprenant deux parties annulaires (2, 3) produites indépendamment l'une de l'autre qui sont jointes dans la direction axiale, les parties annulaires comprenant chacune un manchon de support intérieur (4; 4.1, 4.2) et un manchon de support extérieur (5; 5.1, 5.2) entourant le manchon intérieur avec une distance radiale, ainsi qu'un corps élastique (6) en matière élastomère reliant les manchons de support (4, 5), qui est pourvu d'au moins deux évidements (7, 8), les parties annulaires étant exécutées et jointes de manière à ce que les évidements se complètent afin de former une première et une seconde chambres de travail (9, 10) remplies de liquide, qui sont étanchéifiées par rapport à l'environnement et reliées l'une à l'autre d'une manière permettant la circulation de liquides grâce à au moins un dispositif d'amortissement (11), et la transmission des charges se faisant principalement dans la direction axiale, par le biais de parties d'appui des manchons de support intérieurs (4.1, 4.2) s'étendant dans le sens radial par endroits, sur des parties d'appui des manchons de support extérieurs (5.1, 5.2) s'étendant également dans le sens radial par endroits, parties entre lesquelles sont intercalées des premières zones partielles externes axiales du corps élastique (6), caractérisé en ce qu'une seconde zone partielle interne des corps élastiques (6) adjacente, dans le sens axial, aux parties d'appui des manchons de support extérieurs (5.1, 5.2) est en contact, dans le sens radial vers l'extérieur, avec le manchon de support extérieur respectif (5.1, 5.2), et en ce que les surfaces frontales des secondes zones partielles des corps élastiques (6), contiguës dans le sens axial, sont en contact l'une avec l'autre et soumises à une précontrainte axiale résultant du montage, de manière à ce qu'une déformation élastique et un écrasement se produisent dans cette zone afin d'augmenter l'élasticité aussi bien dans la direction axiale que dans la direction radiale.

2. Manchon élastique selon la revendication 1, caractérisé en ce que les corps élastiques (6) limitent au moins une des chambres de travail (9, 10), sur le côté éloigné des manchons de support intérieurs (4), avec un profil (12) en forme de toit, en ce que, afin d'établir une précontrainte radiale, les corps élastiques (6) présentent, de par leur fabrication, une étendue axiale plus grande que dans l'état de montage précontraint, et en ce que, afin d'établir une précontrainte axiale, les manchons de support intérieurs et extérieurs (4, 5) contigus les uns aux autres dans le sens axial s'entourent, au moins partiellement, à l'état de montage.

3. Manchon élastique selon la revendication 2, caractérisé en ce que les manchons de support intérieurs et extérieurs (4, 5) sont formés d'un matériau métallique, et en ce qu'au moins un des manchons de support intérieurs (4.1) et au moins un des manchons de support extérieurs (5.1) entourent, par conjugaison de forme, une extrémité des manchons de support (4.2, 5.2) contigus dans le sens axial.

4. Manchon élastique selon l'une des revendications 1 à 3, caractérisé en ce que les corps élastiques (6) limitent, sur leurs côtés tournés l'un vers l'autre, de par leur fabrication, une fente (13) ayant essentiellement la forme d'un O.

5. Manchon élastique selon l'une des revendications 1 à 4, caractérisé en ce que les évidements (7, 8) des corps élastiques (6) forment, sur leurs côtés tournés l'un vers l'autre, au moins un canal d'étranglement (14).

6. Manchon élastique selon la revendication 5, caractérisé en ce que le canal d'étranglement (14) est situé dans la zone de la circonférence interne des manchons de support extérieurs (5).

7. Manchon élastique selon l'une des revendications 1 à 6, caractérisé en ce que les manchons de support intérieurs (4.1, 4.2) sont appuyés, sur le côté interne et dans la zone de leurs côtés frontaux éloignés l'un de l'autre, sur au moins une douille coulissante (15) en matière polymère, et en ce que la douille coulissante (15) est logée dans un palier (16) dans le sens axial et dans le sens radial.

8. Manchon élastique selon l'une des revendications 1 à 7, caractérisé en ce que les manchons de support intérieurs (4.1, 4.2) ont, à l'état monté, un profil ayant essentiellement la forme d'une cuvette et sont entourés, au moins partiellement, sur leur côté frontal, par une première partie débordante en caoutchouc (17) solidaire avec l'élément élastique (6) contigu, en ce que le manchon de support extérieur (5.1) d'une des deux parties annulaires (2) couvre, au moins partiellement dans le sens axial, l'élément annulaire (3) contigu axialement, et en ce que le manchon de support extérieur (5.1) est pourvu, au moins partiellement, du côté de sa circonférence externe, d'une seconde partie débordante en caoutchouc (18).

9. Manchon élastique selon la revendication 8, caractérisé en ce que les parties débordantes en caoutchouc (17, 18) sont pourvues chacune d'un profilage (19, 20) qui est exécuté en tant que compensation des tolérances de longueur et de diamètre.

10. Manchon élastique selon l'une des revendications 1 à 9, caractérisé en ce qu'une soupape (21) en matière élastomère est située entre les parties annulaires (2, 3) dans la direction axiale, laquelle soupape est pourvue d'un élément de fermeture (22) saillant en direction des manchons de support intérieurs (4), et en ce que l'élément de fermeture (22) divise chaque chambre de travail (9, 10) en deux chambres partielles (9.1, 9.2; 10.1, 10.2) contiguës axialement et peut être actionné par une pression différentielle à l'intérieur des chambres partielles (9.1,9.2;10.1,10.2).
